# EUROPEAN PATENT SPECIFICATION

(11) **EP 0 811 287 B1**
(45) Date of publication and mention of the grant of the patent: **19.05.1999**
(21) Application number: 95914588.9
(22) Date of filing: 23.02.1995
(51) Int. Cl.: H04L 25/02

(54) **INTERFACE ISOLATOR CIRCUIT FOR DIFFERENTIAL SIGNALS**
SCHALTUNG ZUR ISOLIERUNG VON SCHNITTSTELLEN FÜR DIFFERENTIELLE SIGNALE
CIRCUIT D'ISOLEMENT D'INTERFACE POUR SIGNAUX DIFFERENTIELS

(43) Date of publication of application: 10.12.1997
(73) Proprietor: Dolphin Interconnect Solutions A/S, 0621 Oslo (NO)
(72) Inventor: BIRKELI, Inge, N-2730 Lunner (NO)
(74) Representative: Brunner, Michael John
(86) International application number: NO9500041
(87) International publication number: WO9626590

(56) References cited:
- US-A- 3 260 947
- US-A- 3 699 469
- US-A- 3 883 816
- US-A- 4 573 168
- US-A- 4 763 340
- US-A- 5 300 896

## Description

The present invention relates to an interface isolator circuit for differential signals for use in interconnecting different digital equipment types.

Although it is common to apply differential signals when interfacing digital equipment units with insufficient common signal reference, e.g. when these units have different power supplies and separated grounding systems, there still exist limitations and problems in connection with this technique:

First, there is the fact that the common mode range, which is the limited voltage range within which the signals must be kept, often has a size of 2V, with the upper limit at the most positive voltage (V_{cc}). For PECL (pseudo emitter coupled logic) or LVDS (low voltage differential signals) systems having different power supplies, variations in the supply voltage (even within specifications) may cause the common mode range voltage (V_{CMR}) to exceed limits. A voltage drop on ground wires between the systems, caused by return current of other interfaces, electrostatic discharge, or ground currents of any source and frequency, may often also be a serious problem for the common mode range voltage. Exceeding the V_{CMR} limits causes permanent damage to devices only in extreme cases, but data errors will very likely occur.

Missing ground connection, which normally is a matter beyond legal safety rules, may occasionally appear and may then cause extreme potential differences between the systems, up to the maximum mains voltage, or even higher. In extreme cases with 220V mains, and grounding error in both systems, the peak to peak voltage between the systems may amount to more than 300V. The damage caused by missing ground connection may be huge, and this problem will most likely occur in the moment when interface cables are connected or disconnected.

It is often impossible to interface different signal families directly, because of different reference levels relative to system ground. Translators are available for ECL (emitter coupled logic) to PECL (pseudo emitter coupled logic) and vice versa, but such translators are relatively slow and thus may introduce substantial extra skew. For LVDS (low voltage differential signals), no known translator exists.

Some isolating solutions are previously known, and some interface types having galvanic isolation, able to withstand the actual voltages, are available for different requirements:

AC coupling by means of simple transformers or capacitors requires signals alternating with a minimum frequency and without any DC bias. For RZ (return-to-zero) or unencoded NRZ (no-return-to-zero) data streams, like for SCI (scalable coherent interface) link signals, DC restoration must be performed prior to such AC coupling, thus requiring twice the transmission band width and complex additional circuits.

Photo couplers are limited to sub-MBit/s speeds, and certainly not suited for high speed parallel transmission.

Optical fiber links for single bit GBit/s speeds have been available for a while, and a system for 10 bit parallel transmission with 3GBit/s band width has recently been presented on the market. However, such systems are quite expensive as to money, space and power.

US-A-3,883,816 describes an interface circuit for signal transfer and galvanic isolation between a differential amplifier circuit and a transmission cable, said interface circuit comprising a charge coupler input stage and having a high common mode rejection ratio. Another AC-coupled differential amplifier is described in US-A-5,300,896.

Thus, there remains a need for a more efficient isolating solution. The present invention addresses this problem and provides such a high speed, versatile isolator circuit.

In accordance with the invention, there is provided an interface circuit for signal transfer and galvanic isolation between digital processing units or between a processing unit and a transmission cable. The processing units communicate by means of differential signals, a differential signal being communicated via a line pair comprising respective positive and negative signal lines. The interface circuit further comprises
- a charge coupler input stage including one respective capacitor for each respective of positive and negative signal input lines, and is characterized by
- a self-latching differential buffer stage connected directly after the input stage, the buffer stage comprising a differential amplifier having its respective inputs connected directly to respective ones of the capacitors, and a resistive feedback network connected across the differential amplifier, including a cross-coupled resistor connected between the input terminals of the amplifier.

In a preferred embodiment, the resistive network comprises single resistors connected directly between respectively positive input and output, respectively negative input and output of the differential amplifier.

The differential amplifier may be of a type having open emitter followers, and in such a case, DC biasing resistors are connected between each amplifier output and a fixed supply voltage line.

Further embodiments and advantages of the invention will be explained in the following, also with reference to the appended drawings, where
fig. 1 shows the preferred embodiment of the interface isolation circuit of the invention,
fig. 2 shows a voltage versus time diagram for input and output voltages of the isolator circuit,
fig. 3 shows the isolator circuit in an application in an SCI link both in a transmitter and a receiver configuration,
fig. 4 shows an application of isolator circuits in connection with a link controller, and
fig. 5 is a table showing isolator input impedance versus frequency.

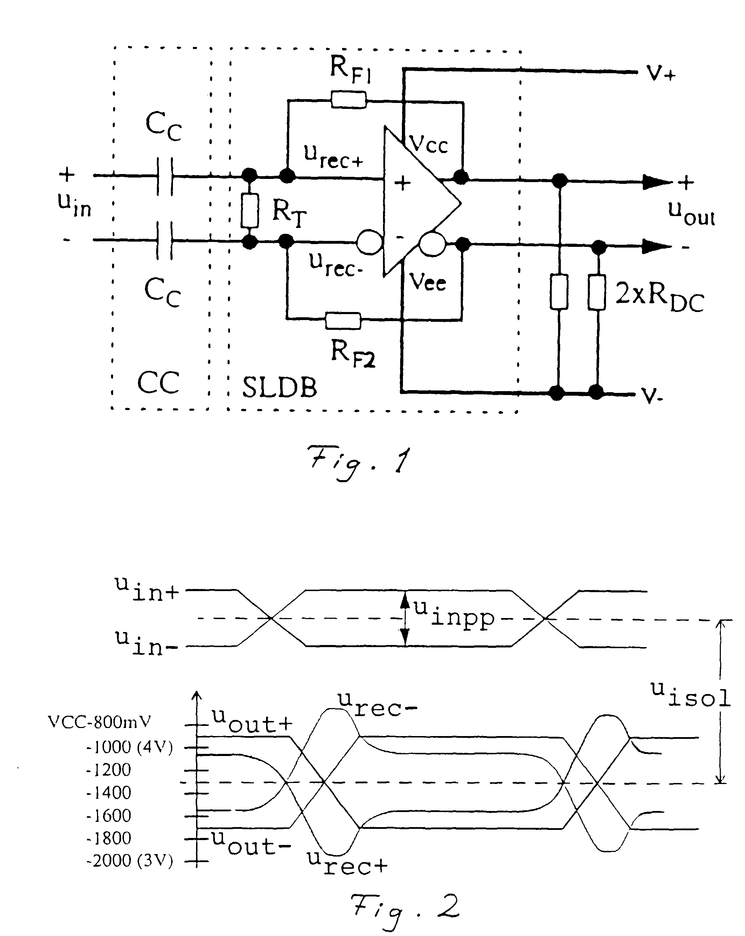

Fig. 1 shows the preferred embodiment of the isolator circuit for one bit, which consists of two main parts: a charge coupler CC including two capacitors C_{C}, and a part which is a self latching differential buffer SLDB including a differential amplifier (receiver) and a resistive feedback network including resistors R_{F1}, R_{T} and R_{F2}. Different types of differential amplifiers may fulfil the requirements set, but in the current implementation of the isolator circuit the Motorola ECL in PS MC100E116 ECL is used. This Motorola circuit is of a type with open emitter followers at the output, and therefore a DC biasing resistor R_{DC} is applied to each output.

In fig. 1 power to the differential amplifier is supplied from the output side of the circuit, which is unproblematic. However, if the receiver power is to be supplied from the input side of the isolator circuit, a DC/DC converter with sufficient isolation capability must be used.

It should be noted that the resistor network of the self latching differential buffer also serves as line AC impedance termination, and together with the two capacitors of the charge coupler, as a highpass filter.

Referring to fig. 2, which shows the relation between input and output signals for the isolator circuit of fig. 1, the following remarks should be made. Initially, after power up, the state of the latch output uₒᵤₜ is arbitrary. However, at any transient of the input signal uᵢₙ, uₒᵤₜ will stay at or switch to the same state as uᵢₙ after transition, provided that the raise/fall-time, the transition level and the skew properties of the input signal are all within defined limits. The feedback resistors will cause the receiver to act like a Schmitt-trigger, i.e. accelerate the switching. The isolation voltage capability uᵢₛₒₗ is indicated, and may typically have a value of about 500 V. The peak-to-peak voltage of the input differential signal is indicated as uᵢₙₚₚ, and the remaining symbols shown in fig. 2 also appear in fig. 1.

One notes when looking at fig. 2, that the voltages (e.g. u_{rec-}) on the input side of the differential amplifier react very rapidly to a change in uᵢₙ₊ and uᵢₙ₋, that is, the voltage rise of u_{rec-} is accelerated due to positive feedback. As clearly appears, u_{rec-} overshoots somewhat before finding a new stable value, since u_{rec-} will be a sum of a signal arriving from the input capacitors and a signal fed back (and divided down) by the feedback network from the amplifier output.

It is to be noted that the isolator circuit shown in fig. 1 is a low-cost circuit, and it consumes quite moderate power and saves space. The circuit exhibits extremely low signal delay, typical delay value for the implementation shown being less than 0.5 ns, and very little skew. Therefore, it is well suited for parallel transmission, especially for applications like SCI links (scalable coherent interface links, refer to the IEEE standard for scalable coherent interface (SCI) std. 1596-1992). The isolator circuit is also excellent for interfacing different signal families, and it eliminates any V_{CMR} problems as discussed in the introductory part of the description. Further, the circuit may easily be designed to withstand 500V, and for special applications, even up to 2000V.

There are three different families of differential signals which are of current interest for application with the isolator circuit of the present invention, namely emitter coupled logic (ECL), pseudo emitter coupled logic (PECL) and low voltage differential signals (LVDS). The same circuitry may also be used with any other signal families having a typical signal swing in the range of 400mV to 1V, raise and fall time of 250ps to 2ns, and maximum differential skew of 500ps. With adapted components and component values, the principle of the circuit may be applied to any digital differential signal system.

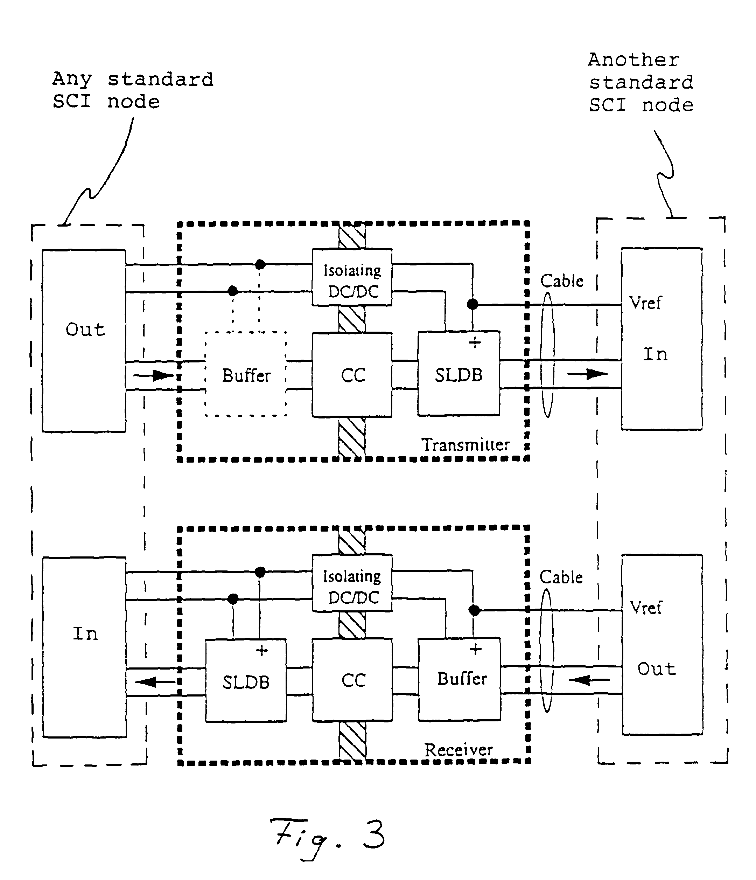

In fig. 3 is depicted an application of the isolator circuit of the invention with an SCI link, with signals as mentioned in the previous section, in order to avoid all the general interfacing problems described in the introduction. The isolator circuit of the invention, comprising the charge coupler section CC and the self latching differential buffer section SLDB, is arranged in respectively a transmitter and a receiver unit which also incorporates a buffer in front of the CC section in the receiver and an optional buffer in the transmitter. Power is supplied through an isolating DC/DC converter in both cases. The isolator circuit of the invention may be integrated into an EDU device (External Divider Unit, for ring topology) or in a switch (for the case of star topology), or as a separate device to be inserted to the link cable. In fig. 3 is indicated a solution where the transmitter and receiver units are inserted (as one or two "boxes") between a standard SCI node, indicated at left, and a cable (or two cables) on the right which is connected to some other standard SCI node. The transmitter and receiver units may be add-on units to be coupled to the left node by means of the cable connector, and have corresponding cable connector(s) on the right side for mating with the cable. Or, the transmitter and receiver may be added or integrated inside the left node and be a part thereof. Power may be supplied from the closest node through the cable connector, or from an attached power supply. If the transmitter is instead connected to the SCI link on the left side of the drawing through a cable (not shown in fig. 3), thus receiving signals of reduced quality, a buffer has to be applied prior to the CC section (such a buffer is indicated by dotted lines). Otherwise, if the transmitter circuitry is integrated in the node circuitry as mentioned above, or is directly connected thereto via a plug, this buffer may be omitted.

In the receiver section shown in fig. 3, where a cable is connected on the right side, a buffer must of course be used to restore signal quality on the input side.

In fig. 3 V_{ref} is the signal reference voltage of the signal type in question, i.e. for PECL signals V_{ref} is V_{cc} = +5V, for ECL signals V_{ref} is V_{cc} = OV, and for LVDS signals V_{ref} is +2V, provided by dividing from V_{cc}.

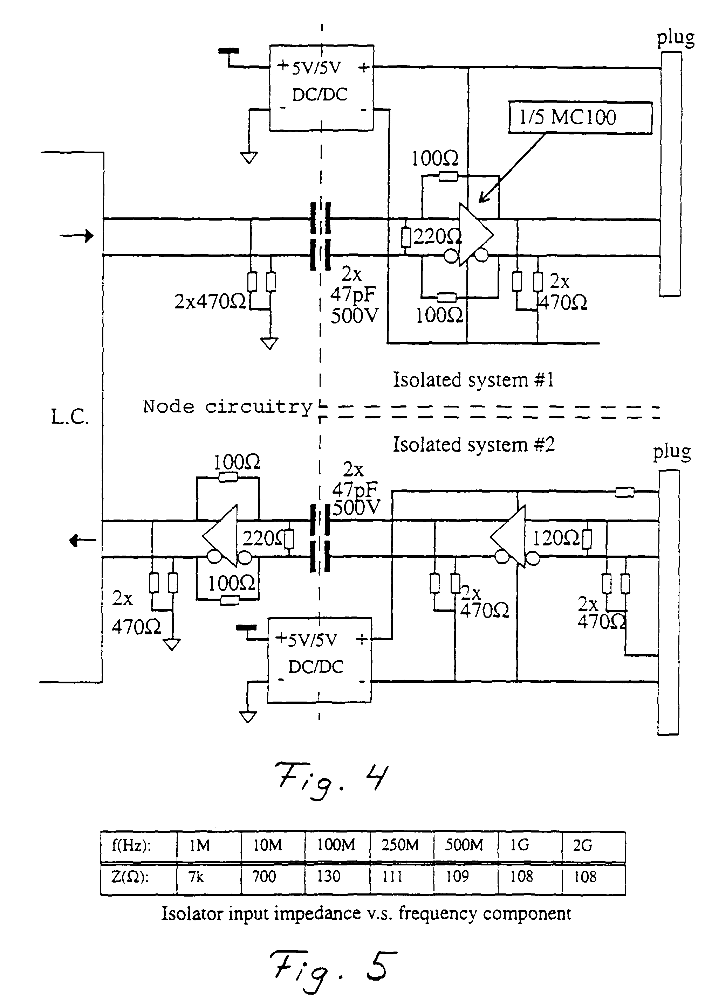

Fig. 4 shows another application example where the isolator circuit of the invention is used. This is an application with a link controller, and the drawing shows one out of eighteen bits, in each direction. Practical component values are also indicated in the drawing, and with these component values the relation between isolator input impedance and frequency will be as indicated in fig. 5. The dashed lines indicate the separation between different systems, i.e. the isolation borders. The left "node circuitry" is the same as the left part of fig. 3, i.e. to the left of the "wall" having slanted lines in fig. 3. The top part of fig. 4 shows a transmitter, and the lower part shows a receiver, as in fig. 3.

There are plugs on the far right side, indicating an integrated construction as mentioned above.

With the components selected as shown, and for the high signal frequencies of interest, the link controller will see an impedance quite near the desired 100 ohm value when looking toward the transmitter, while the isolating effect for low frequencies will be quite sufficient, in the M ohm range at DC. This effect appears clearly from fig. 5.

## Claims

1. An interface circuit for signal transfer and galvanic isolation between digital processing units or between a processing unit and a transmission cable, said processing units communicating by means of differential signals, a differential signal being communicated via a line pair comprising one positive and one negative signal line, said circuit comprising a charge coupler input stage (CC) including one respective capacitor (C_{c}) for each respective of positive and negative signal input lines,
**characterized** by a self-latching differential buffer stage (SLDB) connected directly after said input stage (CC), said buffer stage (SLDB) comprising a differential amplifier having its respective inputs connected directly to respective ones of said capacitors (C_{c}), and a resistive feedback network (R_{F1}, R_{F2}, R_{T}) connected across said differential amplifier, including a cross-coupled resistor (R_{T}) connected between the input terminals of the amplifier.

2. The interface circuit of claim 1,
**characterized** in that the resistive network comprises single resistors (R_{F1}, R_{F2}) connected directly between respectively positive input and output, respectively negative input and output of said differential amplifier.

3. The interface circuit of claim 1 or 2,
**characterized** in that said differential amplifier is of a type having open emitter followers and has DC biasing resistors (R_{DC}) connected between each amplifier output and a fixed supply voltage (V₋) line.

## Patentansprüche

1. Schnittstellenschaltung zur Signalübertragung und zur galvanischen Trennung zwischen digitalen Verarbeitungseinheiten oder zwischen einer Verarbeitungseinheit und einem Übertragungskabel, wobei die Verarbeitungseinheiten durch differentielle Signale kommunizieren, wobei ein differentielles Signal über ein Leitungspaar ausgetauscht wird, das eine positive und eine negative Signalleitung enthält, wobei die Schaltung eine Ladungskoppler-Eingangsstufe (CC) mit einem jeweiligen Kondensator (C_{c}) für jede der positiven und negativen Signaleingangsleitungen enthält,
**gekennzeichnet durch** eine selbsteinrastende differentielle Pufferstufe (SLDB), die direkt nach der Eingangsstufe (CC) angeschaltet ist, wobei die Pufferstufe (SLDB) einen Differenzverstärker, dessen jeweilige Eingänge direkt an entsprechende der Kondensatoren (C_{c}) angeschlossen sind, sowie ein Rückkopplungswiderstandsnetzwerk (R_{F1}, R_{F2}, R_{T}) enthält, das über den Differenzverstärker angeschaltet ist und einen kreuzgekoppelten Widerstand (R_{T}) enthält, der zwischen die Eingangsanschlüsse des Verstärkers geschaltet ist.

2. Schnittstellenschaltung nach Anspruch 1,
**dadurch gekennzeichnet,** daß das Widerstandsnetzwerk einzelne Widerstände (R_{F1}, R_{F2}) enthält, die direkt zwischen den positiven Eingang und den Ausgang bzw. den negativen Eingang und den Ausgang des Differenzverstärkers geschaltet sind.

3. Schnittstellenschaltung nach Anspruch 1 oder 2,
**dadurch gekennzeichnet,** daß der Differenzverstärker von einem Typ mit offenen Emitterfolgern ist und Gleichstromvorspannungswiderstände (R_{DC}) besitzt, die zwischen jeden Verstärkerausgang und eine Leitung für konstante Versorgungsspannung (V₋) geschaltet ist.

## Revendications

1. Circuit d'interface pour un transfert de signaux et un isolement galvanique entre des modules numériques de traitement ou entre un module de traitement et un câble de transmission, lesdits modules de traitement communiquant au moyen de signaux différentiels, un signal différentiel étant transmis par l'intermédiaire d'une paire de lignes comprenant une ligne positive et une ligne négative de signaux, ledit circuit comprenant un étage d'entrée à couplage de charge (CC) comprenant un condensateur correspondant (C_{c}) pour chacune des lignes respectives d'entrée, positive ou négative, de signaux,
caractérisé par un étage tampon différentiel (SLDB) à auto-verrouillage branché directement après ledit étage d'entrée (CC), ledit étage tampon comprenant un amplificateur différentiel ayant ses entrées respectives reliées directement à ceux correspondants desdits condensateurs (C_{c}), et un réseau résistant de rétroaction (R_{F1}, R_{F2}, R_{T}) branché aux bornes dudit amplificateur différentiel, comprenant une résistance de rétrocouplage (R_{T}) branchée entre les bornes d'entrée de l'amplificateur.

2. Circuit d'interface selon la revendication 1, caractérisé en ce que le réseau résistant comprend des résistances individuelles (R_{F1}, R_{F2}) branchées directement entre d'une part l'entrée et la sortie positives, et d'autre part l'entrée et la sortie négatives dudit amplificateur différentiel.

3. Circuit d'interface selon la revendication 1 ou 2, caractérisé en ce que ledit amplificateur différentiel est d'un type ayant des émetteurs-suiveurs ouverts et a des résistances de polarisation en courant continu (R_{DC}) branchées entre chaque sortie de l'amplificateur et une ligne d'alimentation (V₋) à tension fixe.
